Europäisches Patentamt

European Patent Office

Office européen des brevets

(11) Veröffentlichungsnummer: **0 185 742**
**B1**

(12) **EUROPÄISCHE PATENTSCHRIFT**

(45) Veröffentlichungstag der Patentschrift: **06.06.90**

(21) Anmeldenummer: **85903190.8**

(22) Anmeldetag: **24.06.85**

(86) Internationale Anmeldenummer:
**PCT/AT85/00016**

(87) Internationale Veröffentlichungsnummer:
**WO 86/00260 16.01.86 Gazette 86/02**

(51) Int. Cl.⁵: **B 29 B 15/12, B 29 C 67/14**

(54) **VERFAHREN ZUM IMPRÄGNIEREN EINES FLÄCHIGEN KOMPRIMIERBAREN TRÄGERMATERIALS MIT KUNSTHARZ SOWIE VORRICHTUNG ZUR DURCHFÜHRUNG DIESES VERFAHRENS.**

(30) Priorität: **22.06.84 AT 2023/84**

(43) Veröffentlichungstag der Anmeldung:
**02.07.86 Patentblatt 86/27**

(45) Bekanntmachung des Hinweises auf die Patenterteilung:
**06.06.90 Patentblatt 90/23**

(84) Benannte Vertragsstaaten:
**AT BE CH DE FR GB IT LI NL SE**

(56) Entgegenhaltungen:
**EP-A-0 027 543          US-A-2 975 503**
**DE-A-2 042 202          US-A-3 279 424**
**DE-A-2 832 585          US-A-3 915 783**

**Abstract Bulletin of the Institute of Paper Chemistry, Band 54, Nr.4, October 1983 Appleton, Wisconsin (US) siehe Seite 4340-9, Zusammenfassung 4348, & JP, A, 150574 (MATSUSHITA DENKO Co. Ltd.) 17. September 1982**

(73) Patentinhaber: **ISOVOLTA Österreichische Isolierstoffwerke Aktiengesellschaft Industriezentrum-Süd A-2351 Wiener Neudorf (AT)**

(72) Erfinder: **MELCHER, Gerhard Waldgasse 40/24 A-1100 Wien (AT)**

(74) Vertreter: **Stampfer, Heinz ISOVOLTA Österreichische Isolierstoffwerke AG Industriezentrum-Süd A-2351 Wiener Neudorf (AT)**

(56) Entgegenhaltungen:
**International Science and Technology, Band 7, Nr. 1, 1980, Shabury, Shrewsbury (GB) A.A. Peshekhonov et al.: "Glass-filled thermoplastics sheet for pressing (stamping) operations", Seiten T/100-T/102, siehe Seite T/101, linke Spalte oben, Diagramm**
**Composites, Band 14, Nr. 2, April 1983, Guildford, Surrey (GB), M.Molineux: "Prepreg, tape and fabric technology for advanced composites" Seiten 87-91**

Courier Press, Leamington Spa, England.

## Beschreibung

Die Erfindung betrifft ein Verfahren zum Imprägnieren eines flächigen, gegebenenfalls faserigen Trägermaterials mit Kunstharz, bei dem eine flüssige Kunstharzschicht gebildet und mit dem flächigen Material vereinigt wird, wobei sich die Kunstharzschicht und das flächige Material unter Anwendung von Druck gegenseitig durchdringen. Sie betrifft ferner eine Vorrichtung zur Durchführung des erfindungsgemäßen Verfahrens.

Ein Verfahren der obengenannten Art wird als erster Verfahrensabschnitt bei der kontinuierlichen Herstellung von faserverstärkten Bahnen aus wärmehärtenden Kunststoff, wie sie in der EP-A-27543, auf welcher die Ober Begriffe der Ansprüche 1 und 11 basieren, beschrieben ist, verwendet. Bei diesem Verfahrensabschnitt wird auf eine Hilfsfolienbahn, die z.B. aus einem Siliconapapier oder einer ABS-Folie bestehen kann, eine flüssige Kunstharzschicht aufgebracht, wonach man die so beschichtete Hilfsfolienbahn und eine Verstärkungsbahn, die aus Faserrovings, Glasseidengewebe oder Glasfasermatten bestehen kann, im spitzen Winkel aufeinander zulaufend an einer Umlenkrolle miteinander vereinigt. Dabei wird durch den geringen Druck, mit der an der Umlenkrolle die Verstärkungsbahn auf der Kunststoffschicht aufliegt, die Verstärkungsbahn in die freie Oberfläche der Kunststoffschicht hineingedrückt, so daß sich Verstärkungsbahn und Kunststoffschicht gegenseitig durchdringen, womit der Imprägniervorgang abgeschlossen ist. In der Folge durchläuft die Kunststoffschicht, die nun die Verstärkungsbahn enthält, eine Heizstation, in der eine Vorgelierung des Kunstharzes stattfindet, und anschließend eine beheizte Bandpresse, in der die faserverstärkte Kunstharzschicht ausgehärtet wird. Das aus der genannten EP-A-27543 bekannte Verfahren ist zum Imprägnieren von faserigen Verstärkungsbahnen, wie Faserrovings, Glasseidengeweben oder Glasfasermatten bestimmt, die eine hohe Luftdurchlässigkeit haben.

Zum Imprägnieren von flächigen komprimierbaren Trägermaterialien, wie Papieren, die eine geringere Luftdurchlässigkeit, das heißt Meßwerte nach Gurley von mehr als 1,0 s aufweisen, mit Kunstharz zur Erzeugung eines stapelbaren Produktes, insbesondere eines sogenannten "Prepregs", wie sie zur Herstellung von Kunstharz-Schichtpreßstoffplatten eingesetzt werden, ist die Technik bisher andere Wege gegangen.

Bei einem allgemein üblichen Imprägnierverfahren durchläuft eine endlose Trägermaterialbahn, z.B. eine Papierbahn in einer Imprägnierstation eine Tränkwanne, die eine niedrigviskose Kunstharzlösung enthält, welche die Papierbahn während seines Durchlaufes völlig durchtränkt. Die Papierbahn passiert danach ein Dosierwalzenpaar und anschließend einen Trockenkanal, in welchem das Lösungsmittel der von dem Papier aufgenommenen Kunstharzlösung in einem Heißluftstrom zum größten Teil abgedampft und mit der Abluft der Anlage abgeführt wird. Die nach Gurley bestimmte Luftdurchlässigkeitswerte der so zu imprägnierenden Papiere betragen dabei im allgemeinen zwischen 10 und 20 s, wobei bei manchen Spezialpapieren auch Werte zwischen 1 bis 5 s bzw. auch über 20 s gemessen werden.

Die mit Kunstharz imprägnierte Papierbahn wird nun gewöhnlich nach Verlassen des Trockenkanals in Einzelblätter aufgeteilt, welche auch als "Prepregs" bezeichnet werden. Aus solchen Prepregs können dann z.B. durch Verschlichten der Prepregs zu Paketen und durch Heißverpressen dieser Pakete unter hohem Druck in an sich bekannter Weise Kunstharz-Schichtpreßstoffplatten hergestellt werden. Dieses bekannte Verfahren hat den Vorteil, daß der Harzauftrag in der Papierbahn durch Einstellen der Konzentration der Kunstharzlösung und durch Abquetschen der überschüssigen Harzlösung in den Dosierwalzen relativ einfach und genau dosiert werden kann. Es hat aber den Nachteil eines relativ hohen Energiebedarfs, der zunächst hauptsächlich durch die Erzeugung der beim Trocknungsprozeß benötigten Heißluft gegeben ist. Dieser Energiebedarf wird noch erhöht, wenn — zur Vermeidung von Umweltbelastungen — die aus der Anlage abgeführte Abluft, welche neben Wasserdampf noch flüchtige niedermolekulare Harzbestandteile sowie gegebenenfalls organische Lösungsmitteldämpfe enthält, durch Verbrennung gereinigt werden muß.

Hier will die Erfindung Abhilfe schaffen. Die Erfindung, wie sie durch die Ansprüche 1 bis 10 gekennzeichnet ist, löst u.a. die Aufgabe, ein Verfahren der eingangs genannten Art zum Imprägnieren eines flächigen Materials mit Kunstharz anzugeben, das nun aber zur Erzeugung eines stapelbaren Produkts dient, wobei das flächige Material wie die üblichen bei der Schichtpreßstoffplattenherstellung eingesetzten Papiere eine Luftdurchlässigkeit mit Meßwerten nach Gurely von mehr als 1,0 s aufweist und wobei dieses Verfahren eine ähnlich genaue Dosierung wie das genannte bekannte Verfahren zur Papierimprägnierung erlaubt, jedoch gegenüber diesem mit einem wesentlich geringeren Energieaufwand auskommt.

Diese Aufgabe wird zunächst in dem erfindungsgemäß Verfahren nach Anspruch 1 gelöst, das dadurch gekennzeichnet ist, daß man zur Herstellung eines stapelbaren produkts als flächiges zu imprägnierendes Material ein komprimierbares Trägermaterial, das einen Luftdurchlässigkeits-Meßwert nach Gurely von mehr als 1,0 s aufweist, einsetzt, auf das eine flüssige Kunstharzschicht mit einem Kunstharzgehalt von 70 bis 100% angebracht wird, daß das Material der Kunstharzschicht vor und/oder nach diesem Anbringen zum Zwecke der Viskositätsverminderung auf erhöhte Temperatur gebracht wird und danach zumindest zu seinem größten Teil in das Trägermaterial eindringt, und daß das so mit Kunstharz imprägnierte Trägermaterial danach während einer kurzen Zeit einem solchen mechanischen Druck ausgesetzt wird, daß das gegebenenfalls noch als Oberflächenschicht vorhandene Kunstharz in das Trägermaterial eindringt und das Kunstharz das Trägermaterial gleichmäßig durchdringt.

Diese gleichmäßige Durchdringung des Trägermaterials mit dem Kunstharz erfolgt dadurch, daß sich bei der kurzzeitigen Komprimierung des Trägermaterials dessen Porenvolumen verringert, wodurch sich das in Trägermaterial enthaltene Kunstharz über das nun verringerte Porenvolumen gleichmäßiger verteilt. Diese gleichmäßige Verteilung wird auch nach Beendigung der Kompression nicht wieder aufgehoben.

Es ist nun zwar aus der JP-A150754/82 bekannt, im Rahmen einer Laminatherstellung nach dem Naßverfahren (im Gegensatz zu einem Prepreg-Verfahren) mehrere Papierbahnen gleichzeitig dadurch mit Kunstharz zu imprägnieren, daß man das Kunstharz kontinuierlich an der Ober- und Unterseite jeder Papierbahn anbringt. Das angebrachte Kunstharz hat eine so geringe Viskosität, daß es ohne besondere Maßnahmen von den Papierbahnen aufgesaugt wird. Die papierbahnen durchlaufen danach jeweils Abstreichrollenpaare, in denen überschüssiges Harz abgestreift wird, das heruntertropft und rückgeführt wird. Anschließend werden die imprägnierten Papiere mit einem Klebeharz beschichtet und in einem Druckrollenpaar durch Laminieren miteinander vereinigt. Auch hier erfolgt keine Herstellung eines stapelbaren Produkts wie eines Prepregs und auch keine Vergleichmäßigung der Durchdringung des Kunstharzes im Papier durch kurzzeitige Anwendung eines Druckes.

Die Erfindung, wie sie ferner in den Ansprüchen 11 bis 13 gekennzeichnet ist, löst ferner die Aufgabe, eine Vorrichtung zum kontinuierlichen Imprägnieren von faserigen Materialbahnen mit Kunstharz anzugeben, die in der Art wie gemäß der EP-A-27543 bekannten Vorrichtung, mit einer Einrichtung für die Zuführung einer oder mehrerer dieser faserigen Materialbahn(en) versehen ist, und mit einer Einrichtung zum Auf- bzw. Anbringen von flüssigen Kunstharz in Form von Schichten auf bzw. an eine Trägerbahn, sowie mit einer Einrichtung zur Erzeugung einer gegenseitigen Durchdringung von Kunstharzschicht und faseriger Materialbahn durch Anwendung von Druck, und die nun aber zum Imprägnieren eines faserigen Trägermaterials wie Papier mit Kunstharz zur Herstellung eines stapelbaren Produkts, eines sogenannten Prepregs, insbesondere aber zur Durchführung des erfindungsgemäßen Verfahrens geeignet sein soll.

Die Erfindung wird nachstehend anhand der Figuren näher erläutert.

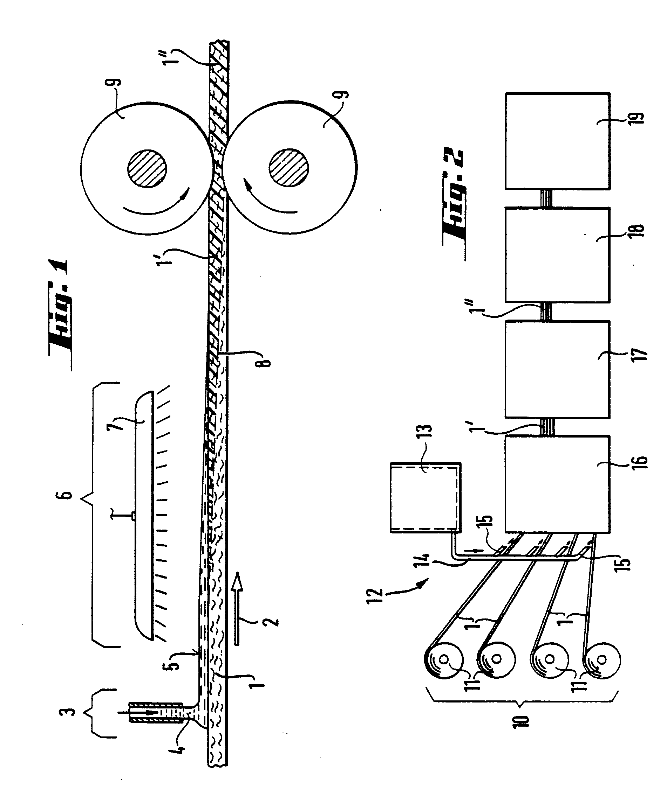

Fig 1 illustriert in einer Schnittdarstellung die wesentlichen Schritte eines bevorzugten Ausführungsweges des erfindungsgemäßen Verfahrens, das zur Imprägnierung einer endlosen Trägermaterialbahn dient.

Diese Trägermaterialbahn 1, die in Fig. 1 zur besseren Übersichtlichkeit übertrieben dick dargestellt ist und die vorteilhaft eine Papierbahn sein kann, wird in Richtung des Pfeiles 2 durch eine Imprägniervorrichtung bewegt. In dieser Imprägniervorrichtung wird in einer Beschichtungsstation 3 über die Trägerbahnbreite gleichmäßig verteilt ein flüssiges, hochviskoses Kunstharz 4 aufgetragen, das auf der Trägermaterialbahn 1 eine Schicht 5 bildet. Dieses hochviskose Kunstharz kann dabei z.B. eine wässrige Lösung eines Phenol-Formaldehydharzes mit einem Harzgehalt von 82 Gew.% sein, das bei 23°C eine Viskosität von etwa 100.000 mPa.s hat.

Die so beschichtete Trägermaterialbahn 1 passiert nun eine Heizzone 6, in der mittels einer Infrarotheizeinrichtung 7 die Schicht 5 auf erhöhte Temperatur gebracht wird, welche für eine hochviskose wässrige Phenol-Formaldehylösung z.B. 70 bis 115°C beträgt. Durch diese Temperaturerhöhung tritt eine Verminderung der Viskosität des Kunstharzes ein, so daß das Kunstharz 4 der Schicht 5 — wie durch den keilförmigen Bereich 8 angedeutet — fortschreitend in die Trägermaterialbahn 1 eindringt und schließlich vollständig von ihr aufgesaugt wird. Da das Porenvolumen der Trägermaterialbahn 1 aber größer als das Volumen der aufgesaugten Kunstharzmenge ist, wird dieses Porenvolumen vom Kunstharz nicht vollständig und auch nicht gleichmäßig ausgefüllt.

Die so mit dem Kunstharz 4 beaufschlagte Trägermaterialbahn 1' durchläuft nun ein beheiztes und dabei auf ca. 125°C gehaltenes Druckwalzenpaar 9 in dessen Walzenspalt die Trägermaterialbahn 1' kurzzeitig so weit komprimiert, das heißt ihr Porenvolumen so weit reduziert wird, daß die vom Trägermaterial aufgenommene Kunstharzmenge das reduzierte Porenvolumen vollständig durchdringt. Nach dem Passieren des Walzenspaltes nimmt die Trägermaterialdicke und das Porenvolumen des Trägermaterials wieder zu, doch bleibt die durch die Kompression des Trägermaterials hervorgerufene gleichmäßige Verteilung des Kunstharzes über das Porenvolumen weitgehend erhalten. Beim Imprägnieren von Papierbahnen, wie sie gewöhnlich bei der Erzeugung von Kunstharz-Schichtpreßstoffplatten eingesetzt werden, liegt der aufzubringende Druck gewöhnlich im Bereich zwischen 500 und 1000 N/cm². Nach dempassieren des Druckwalzenpaares 9 kann die imprägnierte Trägermaterialbahn I'' noch eine Kühlzone durchlaufen, bevor sie aufgerollt oder in Einzelblätter abgelängt und abgestapelt wird. Bei diesem Verfahren ist es von Vorteil, immer solche Bedingungen einzuhalten, daß das Harz nie über seinen Siedepunkt erhitzt wird.

Gemäß einer Variante des anhand von Fig. 1 beschriebenen Ausführungsweges des erfindungsgemäßen Verfahrens wird die mit dem Kunstharz beaufschlagte Trägermaterialbahn 1' dem Druckwalzenpaar 9 zugeführt, wenn erst ein Teil des als Schicht 5 aufgebrachten Kunstharzes 4 in die Trägermaterialbahn eingedrungen ist. Dabei muß jedoch folgendes beachtet werden:

— der im Walzenspalt des Druckwalzenpaares herrschende Druck darf die restliche Kunstharzschicht 5 nicht seitlich wegdrücken,

— die Poren oder Kapillaren des Trägermaterials dürfen nicht so fein sein, daß — insbesondere nach Reduzierung ihrer Abmessungen durch die Kompression — das Kunstharz bei dem im Walzenspalt ausgeübten Druck nicht mehr in diese Poren oder Kapillaren hineingepreßt werden kann.

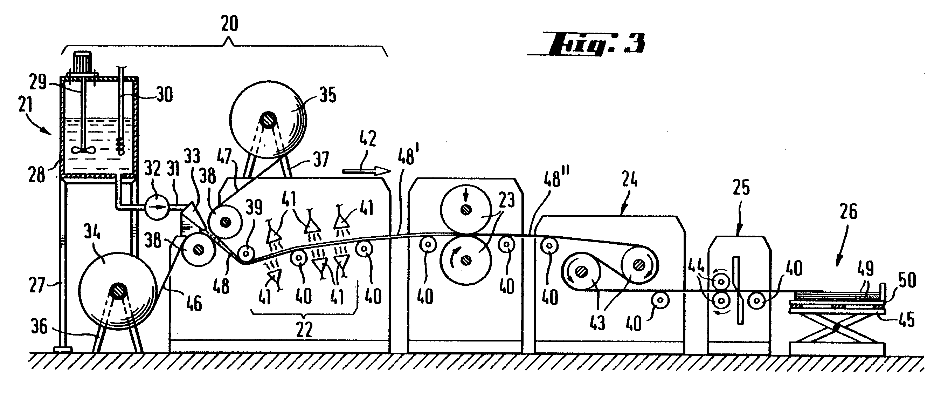

Fig. 2 zeigt in einem Blockschema den Aufbau einer Vorrichtung zur Durchführung des erfindungsgemäßen Verfahrens, bei dem mehrere endlose Trägermaterialbahnen in einem kontinuierlichen Prozeß gleichzeitig imprägniert werden. Die Vorrichtung umfaßt eine Trägermaterialzuführung 10 mit Trägermaterial-Rollen 11, eine Harzauftragsstation 12 mit Harzbehälter 13, Harzzuführung 14 und Beschichtungsköpfen 15 eine Heizstation 16, eine Einrichtung 17 zum Aufbringen eines Druckes, eine Kühlstation 18 und eine Schneide- und Abstapeleinrichtung 19.

Bei der Durchführung des Imprägnierverfahrens werden die Trägermaterialbahnen 1 von den Rollen 11 abgezogen und passieren jeweils einen zugehörigen Beschichtungskopf 15. Mittels dieser Beschichtungsköpfe 15, welche aus dem Harzbehälter 13 über die Harzzuführungen 14 gespeist werden, erfolgt dann — analog wie anhand von Fig. 1 beschrieben — die Beschichtung der Trägermaterialbahnen 1 mit einem flüssigen und hochviskosen Kunstharz. Diese Trägermaterialbahnen 1 durchlaufen nun die Heizstation 16, in welcher die aufgebrachten Kunststoffschichten auf eine erhöhte Temperatur gebracht werden, wobei bzw. wonach das aufgebrachte Kunstharz vollständig von den Trägerbahnen 1 aufgesaugt wird. Die so mit Kunstharz beaufschlagten Trägerbahnen 1' werden nun der Einrichtung 17 zugeführt, in welcher sie dann übereinanderliegend kurzzeitig einem mechanischen Druck unterworfen werden. Währen dieser Druckeinwirkung werden die Trägermaterialbahnen 1' komprimiert und — wie bereits anhand von Fig. 1 erläutert — das Kunstharz über das Porenvolumen des Trägermaterials gleichmäßig verteilt.

Die nach Durchlauf durch die Einrichtung 17 bereits fertig imprägnierten übereinanderliegenden Trägerbahnen 1'' werden danach in einer Kühlstation 19 abgekühlt und schließlich der Schneide- und Abstapeleinrichtung 19 zugeführt, wo sie jeweils in mehrere übereinanderliegende Einzelblätter abgelängt und schließlich abgestapelt werden.

In Fig. 3 ist schematisch im Schnitt eine Anlage zur Durchführung des erfindungsgemäßen Verfahrens zum gleichzeitigen Imprägnieren von zwei Trägermaterialbahnen dargestellt. Sie umfaßt eine Harzauftragsstation 20 mit einer Trägermaterialzuführung und einer Harzzuführung 21 und einer nachgeschalteten Heizzone 22, ein Druckwalzenpaar 23, eine Kühlstation 24, eine Schneideeinrichtung 25 und eine Abstapeleinrichtung 26. Zur Harzzuführung 21 gehört ein auf einem Gestell 27 angebrachter Harzbehälter 28, der ein Rührwerk 29 und eine Heizeinrichtung 30 aufweist und der über eine Leitung 31 und eine Dosierpumpe 32 mit einem am Maschinengestell der Harzauftragsstation 20 angebrachten Gießkopf 33 verbunden ist. Zwei Vorratsrollen 34, 35 für die einzusetzenden endlosen Trägermaterialbahnen sind auf Drehböcken 36 und 37 gelagert. Im Maschinengestell der Harzauftragsstation 21 sind ferner ein Paar Kalibrierrollen 38 sowie Umlenk- bzw. Unterstützungsrollen 39 bzw. 40 drehbar gelagert. Dabei reicht der Gießkopf 33 mit seiner Gießöffnung zwischen die beiden Kalibrierrollen 38 hinein. In der an die beiden Kalibrierrollen 38 anschließenden Heizzone 22 sind eine Reihe von Infrarotstrahlern 41 angeordnet.

In Materialdurchlaufrichtung 42 an die Harzauftragsstation 20 anschließend ist ein beheiztes Druckwalzenpaar 23 angeordnet, in dessen Maschinengestell zwei Unterstützungsrollen 40 vorgesehen sind und wobei eine der Druckwalzen 23 angetrieben ist. Auf das Druckwalzenpaar 23 folgt eine Kühlstation 24 mit zwei drehbar gelagerte und angetriebenen Kühlwalzen 43 sowie zwei Unterstützungsrollen 40. Die nachgeordnete Schneideeinrichtung 25 ist von üblicher Konstruktion und weist eine weitere Unterstützungsrolle 40 sowie ein angetriebenes Transportrollenpaar 44 auf. Die Anlage wird durch die Abstapeleinrichtung 26 abgeschlossen, welche im wesentlichen aus einem Hubtisch 45 besteht.

Bei dem nun zu beschreibenden Verfahrensbeispiel wird ein Natron-Kraftpapier einer Grammatur von 175 g/m$^2$ mit einem Harzauftrag von 40 Gew.% (Feststoff) imprägniert, wobei das so erzeugte "Prepreg" einen volatilen Gehalt von 6 bis 7 Gew.% aufweisen soll. Für die Imprägnierung wird ein Phenol-Formaldehydharz eingesetzt, das mit einem Molverhältnis Phenol-Formaldehyd gleich 1:1,5 in üblicher Weise hergestellt und auf ein hochviskoses Kunstharz in Form einer 82%igen wässrigen Lösung, welche bei 23° eine Viskosität von etwa 100.000 mPa.s aufweist, eingedickt wird.

Zur Durchführung des Verfahrens werden die als Trägermaterialbahnen eingesetzten Papierbahnen 46, 47 von den Vorratsrollen 34, 35 abgezogen und durch den Spalt zwischen den beiden Kalibrierrollen 33 geführt. Das im Harzbehälter 28 vorgelegte Imprägnierharz wird auf ca. 50-60°C erwärmt, wobei seine Viskosität Werte zwischen 33.000 und 10.000 mPa.s annimmt, und über die Leitung 31 in einer durch die Dosierpumpe 32 kontrollierten Menge dem Gießkopf 33 zugeführt.

Das aus der Gießkopf-Öffnung austretende Imprägnierharz wird nun als Schicht zwischen die beiden Papierbahnen 46, 47 eingebracht. Der aus der Imprägnierharz-Schicht und den beiden Papierbahnen 46, 47 gebildete Verbund 48 durchläuft nun die Heizzone 22, wo er durch die Infrarotstrahler 41 auf etwa 110°C aufgeheizt wird. Bei dieser Temperatur hat das Imprägnierharz nur mehr eine Viskosität von unter 100 mPa.s, so daß es in der Heizzone schon zu einem großen Teil in die Poren der beiden Papierbahnen 46, 47 eindringt.

Der Verbund 48', in welchem die Imprägnierharz-Schicht von den Papierbahnen nun schon vollständig oder zumindest zum größten Teil aufgesaugt ist, durchläuft nun das beheizte Druckwalzenpaar 23, wo er kurzzeitig so stark komprimiert wird, daß — wie bereits anhand von Fig. 1 erläutert — das Kunstharz über das Porenvolumen der Papierbahnen gleichmäßig verteilt wird. Das Druckwalzenpaar 23 wird dabei auf einer Temperatur von ca. 125°C gehalten, wodurch eine Abkühlung des Verbundes 48′ im Druckwalzenpaar 23 vermieden wird.

Der von dem Druckwalzenpaar 23 ablaufende Verbund 48″, der nun nur noch aus zwei übereinanderliegenden fertig imprägnierten Papierbahnen besteht, durchläuft nun die Kühlstation 24, in welcher er an den Kühlwalzen 43 auf eine Temperatur von etwa 40°C rückgekühlt wird und danach die Schneideeinrichtung 25, wo er jeweils in zwei übereinanderliegende Einzelblätter 49 abgelängt wird, die schließlich auf dem Hubtisch 45 auf einer Palette 50 abgestapelt werden.

Beim Imprägnieren von endlosen Trägermaterialbahnen gemäß dem erfindungsgemäßen Verfahren wird die Durchlaufgeschwindigkeit der Trägermaterialbahn durch die Imprägnieranlage im wesentlichen von der erforderlichen Einwirkdauer des aufgebrachten Druckes bestimmt, welche aureichen muß, um das aufgesaugte Kunstharz im Trägermaterial gleichmäßig zu verteilen bzw. das gegebenenfalls noch nicht in das Trägermaterial eingedrungene Kunstharz in dieses hineinzupressen. Wegen der zum Zeitpunkt des Aufbringen des Druckes im allgemeinen sehr niedrigen Harz-Viskosität liegen die Werte der erforderlichen Einwirkdauer im allgemeinen zwischen 0,01 und 0,5 s. Bei der Verwendung eines Druckwalzenpaares ergibt sich aus der erforderlichen Einwirkdauer und der vorgegebenen Breite des Liniendruckbereiches zwischen den Druckwalzen die erreichbare Vorschubgeschwindigkeit, an die dann noch die Länge der Heizzone angepaßt werden muß. Für eine weitere Erhöhung der Vorschubgeschwindigkeit müßten gegebenenfalls zwei oder mehrere Druckwalzenpaare angeordnet werden, die von den mit Kunstharz beaufschlagten Trägermaterialien nacheinander durchlaufen werden.

Mit dem erfindungsgemäßen Verfahren ist es auch möglich, gleichzeitig unterschiedliche Trägermaterialien zu imprägnieren bzw. bei der gleichzeitigen Imprägnierung mehrerer Trägermaterialien die verschiedenen Trägermaterialien mit unterschiedlichen Kunstharzen zu imprägnieren. Dabei ist es aber vorteilhaft, daß das Aufbringen des Druckes erst dann erfolgt, wenn das Kunstharz jeweils vollständig in das zugehörige Trägermaterial eingedrungen ist.

Das erfindungsgemäße Verfahren ist auf die Herstellung eines stapelbaren Produktes, d.h. also z.B. eines "Prepregs gerichtet, das gewöhnlich erst nach einer kürzeren oder längeren Lagerung z.B. zu Schichtpreßstoffplatten weiterverarbeitet wird. Die Erfindung umfaßt aber auch den Fall, in dem gleichzeitig und übereinanderliegend hergestellte imprägnierte Trägermaterialbahnen direkt anschließend in derselben Produktionslinie in einer beheizten Bandpresse zu einem endlosen Laminatband verpreßt und ausgehärtet werden.

Die gewerbliche Verwertbarkeit des erfindungsgemäßen Verfahrens liegt insbesondere bei der Imprägnierung von Papieren mit Kunstharzen, wie sie bei der Herstellung von Kunstharz-Schichtpreßstoffplatten eingesetzt werden.

**Patentansprüche**

1. Verfahren zum Imprägnieren eines flächigen gegebenenfalls faserigen Materials mit Kunstharz, bei dem eine flüssige Kunstharzschicht gebildet und mit dem flächigen Material vereinigt wird, wobei sich die Kunstharzschicht und das flächige Material unter Anwendung von Druck gegenseitig durchdringen, dadurch gekennzeichnet, daß man zur Herstellung eines stapelbaren Produkts als flächiges zu imprägnierendes Material ein komprimierbares Trägermaterial (1), das einen Luftdurchlässigkeitswert nach Gurley von mehr als 1,0 s aufweist, einsetzt, auf das eine flüssige Kunstharzschicht (5) mit einem Kunstharzgehalt von 70 bis 100% angebracht wird, daß das Material der Kunstharzschicht (5) vor und/oder nach diesem Anbringen zum Zwecke der Viskositätsverminderung auf erhöhte Temperatur gebracht wird und danach zumindest zu ihrem größten Teil in das Trägermaterial (1) eindringt, uno daß das so mit Kunstharz (4) beaufschlagte Trägermaterial (1′) danach während einer kurzen Zeit einem solchen mechanischen Druck ausgesetzt wird, daß das gegebenenfalls noch als Oberflächenschicht vorhandene Kunstharz in das Trägermaterial eindringt und daß das Kunstharz das Trägermaterial gleichmäßig durchdringt.

2. Verfahren nach Anspruch 1, dadurch gekennzeichnet, daß das Porenvolumen des Trägermaterials (1′) unter Einwirkung des Druckes so weit reduziert wird, daß die beaufschlagte Kunstharzmenge ausreicht, das Porenvolumen des Trägermaterials zumindest nahezu vollständig zu durchdringen.

3. Verfahren nach Anspruch 1 oder 2, dadurch gekennzeichnet, daß der mechanische Druck erst aufgebracht wird, nachdem das Kunstharz der Kunstharzschicht vollständig in das Trägermaterial eingedrungen ist.

4. Verfahren nach einem der Ansprüche 1 bis 3, dadurch gekennzeichnet, daß — zum gleichzeitigen Herstellen von mehreren imprägnierten Trägermaterialien — mehrere mit Kunstharz beaufschlagte Trägermaterialien (1′), bei denen das Material der Kunstharzschicht bereits zumindest zu seinem großen, Teil in das Trägermaterial eingedrungen ist, übereinanderliegend einem mechanischem Druck ausgesetzt werden.

5. Verfahren nach einem der Ansprüche 1 bis 3, dadurch gekennzeichnet, daß — zum gleichzeitigen Herstellen von zwei mit Kunstharz imprägnierten Trägermaterialien — eine Kunstharzschicht so zwischen zwei Trägermaterialien (46, 47) eingebracht wird, daß sie beide Trägermaterialien (46, 47) berührt, wonach das Ganze dann auf erhöhte Temperatur gebracht wird und das Material der Kunstharzschicht zumindest zu seinem größten Teil in die anliegenden Trägerbahnen eindringt und das Ganze dann dem mechanischen Druck ausgesetzt wird.

6. Verfahren nach Anspruch 4 oder 5, dadurch gekennzeichnet, daß zum gleichzeitigen Herstellen von mehreren imprägnierten Trägermaterialien unterschiedliche Trägermaterial ien eingesetzt werden.

7. Verfahren nach einem der Ansprüche 4 bis 5, dadurch gekennzeichnet, daß zum gleichzeitigen Herstellen von mehreren imprägnierten Trägermaterial ien, die verschiedenen Trägermaterialien mit unterschiedlichen Kunstharzen imprägniert werden.

8. Verfahren nach einem der Ansprüche 1 bis 7, dadurch gekennzeichnet, daß es in Form eines kontinuierlichen Verfahrens durchgeführt wird, bei welchem das Trägermaterial bzw. die Trägermaterialien als endlose Trägermaterialbahnen (1, 46, 47) eingesetzt werden.

9. Verfahren nach Anspruch 8, dadurch gekennzeichnet, daß der mechanische Druck als Liniendruck mittels Druckwalzen (9, 23) aufgebracht wird.

10. Verfahren nach Anspruch 9, dadurch gekennzeichnet, daß ein solcher Liniendruck mehrmals nacheinander aufgebracht wird.

11. Vorrichtung zum kontinuierlichen Imprägnieren von faserigen Materialbahnen mit Kunstharz, mit einer Einrichtung für die Zuführung eines oder mehrerer dieser faserigen Materialbahn(en) und einer Einrichtung zum Auf- bzw. Anbringen von flüssigem Kunstharz in Form von Schichten auf bzw. an eine Trägerbahn sowie mit einer Einrichtung zur Erzeugung einer gegenseitigen Durchdringung von Kunstharzschicht und faseriger Materialbahn durch Anwendung von Druck, insbesondere zur Durchführung des Verfahrens nach einem der Ansprüche 8 bis 10, dadurch gekennzeichnet, daß jeweils die Einrichtung (15) zum Aufbzw. Anbringen von flüssigem Kunstharz in Form von Schichten einer zugehörigen Einrichtung (10) zur Zuführung von faserigen Trägermaterialbahn(en) (1) nachgeordnet ist und zum Auf- bzw. Anbringen der flüssigen Kunstharzschicht an bzw. auf die faserige(n) Trägermaterialbahn(en) (1) dient, daß eine Einrichtung (17) zum Aufbringen eines während einer kurzen Zeit wirkenden Druckes auf die Trägermaterialbahn(en) (1') vorgesehen ist, in der bzw. denen die Kunstharzschicht bereits zumindest zum größten Teil eingedrungen ist, daß eine Heizeinrichtung (16) vorgesehen ist, die der Einrichtung zum Aufbringen des Druckes in Produktionsrichtung vorangeht, und der Aufheizung der noch nicht in die Trägermaterialbahn(en) eingedrungenen Kunstharzschichten dient, daß gegebenenfalls eine Kühlstation (24) für die imprägnierten Trägermaterialbahnen (1'') angeordnet ist, und daß eine oder mehrere Aufrolleinrichtung(en) oder eine Schneideeinrichtung mit Abstapeleinrichtung (19) für das imprägnierte und gegebenenfalls gekühlte Trägermaterial (1'') vorgesehen sind.

12. Vorrichtung nach Anspruch 11, dadurch gekennzeichnet, daß die Einrichtung (17) zum Aufbringen eines Druckes aus einem oder mehreren nacheinander angeordneten, gegebenenfalls beheizten Druckwalzenpaar(en) (9, 23) besteht.

13. Vorrichtung zum gleichzeitigen Imprägnieren von zwei endlosen Trägermaterialbahnen nach Anspruch 11 oder 12, dadurch gekennzeichnet, daß die Einrichtung zum Anbringen einer flüssigen Kunstharzschicht ein Kalibrierrollenpaar und einen mit seiner Gießöffnung zwischen die Kalibrierrollen (38) hineinreichenden Gießkopf (33) zum Einbringen der flüssigen Kunstharzschicht zwischen die beiden Trägermaterialbahnen (46, 47) aufweist.

**Revendications**

1. Procédé d'imprégnation d'un matériau plat et mince, éventuellement constitué par des fibres, au moyen d'une résine synthétique, dans lequel une couche de résine synthétique liquide est formée et assemblée avec le matériau plat et mince, la couche de résine synthétique et le matériau plat et mince s'interpénétrant face à face sous l'effet d'une compression, caractérisé en ce qu'en vue de fabriquer un produit superposable, on utilise en tant que matériau plat et mince destiné à être imprégné, un matériau de support que l'on peut comprimer et qui présente une perméabilité à l'air, mesurée selon Gurley supérieure à 1,0 s, sur lequel on dépose une couche (5) de résine synthétique liquide dont la teneur en résine synthétique est de 70 à 100%, en ce que le matériau de la couche (5) de résine synthétique est, avant et/ou après ce dépôt, amené à une température plus élevée dans le but de réduire sa viscosité, et pénètre ensuite, au moins pour la plus grande partie, dans le matériau de support (1), et en ce que le matériau de support (I') ainsi chargé de résine synthétique (4) est soumis ensuite brièvement à une compression mécanique telle que la résine synthétique qui se trouve éventuellement encore à l'état de couche superficielle, pénètre dans le matériau de support et que cette résine synthétique pénètre uniformément dans le matériau de support.

2. Procédé selon la revendication 1, caractérisé par le fait que le volume des pores du matériau de support (1') est réduit sous l'effet de la compression à un point tel que la quantité de résine synthétique déposée suffit à pénétrer au moins presque complètement dans le volume des pores du matériau du support.

3. Procédé selon les revendications 1 ou 2, caractérisé par le fait que la compression mécanique n'est appliquée qu'après que la résine synthétique de la couche de résine synthétique ait complètement pénétré dans le matériau de support.

4. Procédé selon l'une des revendications 1 à 3, caractérisé par le fait que -en vue de la fabrication simultanée deplusieurs matériaux de support imprégnés plusieurs matériaux de support chargés de résine synthétique (1'), dans lesquels le matériau de la couche de résine a déjà pénétré, au moins pour la plus grande part, dans le matériau de support, sont soumis à une compression mécanique en étant placés les uns au-dessus des autres.

5. Procédé selon l'une des revendications 1 à 3, caractérisé par le fait que -en vue de la fabrication simultanée de deux matériaux de support imprégnés, on met en place une couche de résine synthétique entre deux matériaux de support (46, 47), de manière telle qu'elle se trouve en contact avec les deux matériaux de support (46, 47), après quoi l'ensemble est porté à une température plus élevée et le matériau de la couche de résine synthétique pénètre, au moins pour la plus grande part, dans les bandes de support voisines, l'ensemble étant ensuite soumis à la compression mécanique.

6. Procédé selon la revendication 4 ou 5, caractérisé par le fait qu'en vue de la fabrication simultanée de plusieurs matériaux de support imprégnés on utilise des matériaux de support différents.

7. Procédé selon l'une des revendications 4 à 6, caractérisé par le fait qu'en vue de la fabrication simultanée de plusieurs matériaux de support imprégnés, les différents matériaux de support sont imprégnés au moyen de résines synthétiques différentes.

8. Procédé selon l'une des revendications 1 à 7 caractérisé par le fait qu'il est réalisé sous la forme d'un procédé continu dans lequel le matériau de support ou les matériaux de support sont utilisés sous forme de bandes continues (I, 46, 47) de matériau de support.

9. Procédé selon la revendication 8, caractérisé par le fait que la compression mécanique est appliquée sous forme de compression linéaire au moyen de rouleaux de compression (9, 23).

10. Procédé selon la revendication 9 caractérisé par le fait que ladite compression linéaire est appliquée successivement à plusieurs reprises.

11. Installation d'imprégnation continue au moyen d'une résine synthétique de bandes de matériau constitué par des fibres, comportant un dispositif d'amenée d'une ou de plusieurs de ces bandes de matériau constitué par des fibres, et un dispositif destiné à l'apport ou au dépôt de résine synthétique liquide sous forme de couches, sur ou contre une bande de support, ainsi qu'un dispositif destiné à provoquer une interpénétration face à face de la couche de résine synthétique et de la bande de matériau constituée par des fibres en exerçant une compression, en particulier pour la mise en oeuvre du procédé selon l'une des revendications 8 à 10, caractérisée en ce que, dans chaque cas, le dispositif (15) d'épandage ou de dépôt de résine synthétique liquide sous forme de couches est disposé en aval d'un dispositif (10) correspondant d'amenée de bande(s) de matériau de support constitué par des fibres et sert à l'apport ou au dépôt de la résine synthétique liquide sur la ou les bande(s) de matériau de support (1) constitué par des fibres, en ce qu'un dispositif (17) est prévu en vue de l'application d'une compression agissant pendant un temps bref sur la ou les bande(s) (I') de matériau de support, dans la ou lesquelles au moins plus grande partie de la couche de résine synthétique a déjà pénétré, en ce qu'il est prévu un dispositif de chauffage (16) disposé en amont du dispositif d'application de pression dans la direction de la fabrication, et qui sert à chauffer les couches de résine synthétique qui n'ont pas encore pénétré dans la ou les bande(s) de matériau de support, en ce qu'il est prévu, le cas échéant, un poste de refroidissement (24) pour les bandes (I'') de matériau de support imprégné et en ce qu'un ou plusieurs dispositif(s) d'enroulement ou un dispositif de coupe comportant un dispositif d'empilage (19) sont prévus pour le matériau de support (I'') imprégné et, le cas échéant, refroidi.

12. Dispositif selon la revendication 11, caractérisé par le fait que le dispositif (17) d'application de compression est constitué par une ou plusieurs paire(s) (9, 23) de rouleaux de compression placés les uns derrières les autres et, le cas échéant, chauffés.

13. Dispositif destiné à l'imprégnation simultanée de deux bandes continues de matériau de support, selon la revendication 11 ou 12, caractérisé par le fait que le dispositif de dépôt d'une couche de résine synthétique liquide comporte une paire de rouleaux de calibrage et une tête d'écoulement (33) dont l'orifice d'écoulement pénètre entre les rouleaux de calibrage (38) pour déposer la couche de résine synthétique liquide entre les deux bandes (46, 47) de matériau de support.

**Claims**

1. Process for impregnating a planar, optionally fibrous, material with synthetic resin, in which a liquid synthetic resin layer is formed and is united with the planar material, the synthetic resin layer and the planar material mutually penetrate each other with the application of pressure, characterised in that, in order to produce a stackable product, a compressible carrier material (1) which has an air permeability value according to Gurley of more than 1.0 s is used as the planar material which is to be impregnated, onto which material a liquid synthetic resin layer (5) having a synthetic resin content of 70 to 100% is applied, that the material of the synthetic resin layer (5) is raised to a higher temperature before and/or after this application in order to reduce the viscosity and thereafter penetrates at least for the most part into the carrier material (1), and that thereafter the carrier material (1') which has been thus supplied with synthetic resin (4) is then subjected to such a mechanical pressure for a short time that the synthetic resin which may still be present as a surface layer penetrates into the carrier material and that the synthetic resin evenly permeates the carrier material.

2. Process according to Claim 1, characterised in that the pore volume of the carrier material (1') is reduced under the action of the pressure to such an extent that the amount of synthetic resin supplied is sufficient to at least almost completely permeate the pore volume of the carrier material.

3. Process according to Claim 1 or 2, characterised in that the mechanical pressure is applied only after the synthetic resin of the synthetic resin layer has completely penetrated into the carrier material.

4. Process according to one of Claims 1 to 3, characterised in that for the simultaneous production of several impregnated carrier materials — several carrier materials (1') supplied with synthetic resin, in which the material of the synthetic resin layer has at least for the most part already penetrated into the carrier material, are subjected to mechanical pressure while superposed.

5. Process according to one of Claims 1 to 3, characterised in that — for the simultaneous production of two carrier materials impregnated with synthetic resin — a synthetic resin layer is introduced between two carrier materials (46, 47) in such a manner that it is in contact with both carrier materials (46, 47), whereupon the whole is then raised to a higher temperature and the material of the synthetic resin layer penetrates at least for the most part into the adjoining carrier webs and the whole is then subjected to mechanical pressure.

6. Process according to Claim 4 or 5, characterised in that for the simultaneous production of several impregnated carrier materials, different carrier materials are used.

7. Process according to one of Claims 4 to 6, characterised in that for the simultaneous production of several impregnated carrier materials, the different carrier materials are impregnated with varying synthetic resins.

8. Process according to one of Claims 1 to 7, characterised in that it is performed in the form of a continuous process, in which the carrier material or the carrier materials respectively is or are used as continuous carrier material webs (1, 46, 47).

9. Process according to Claim 8, characterised in that the mechanical pressure is applied as line pressure by means of pressure rollers (9, 23).

10. Process according to Claim 9, characterised in that such line pressure is applied repeatedly in succession.

11. Device for the continuous impregnation of fibrous material webs with synthetic resin, with a device for feeding one or more of said fibrous webs and a device for the application of liquid synthetic resin in the form of layers to or on a carrier web and with a device for producing a reciprocal permeation of synthetic resin layer and fibrous material web by the application of pressure, in particular for carrying out the process according to one of Claims 8 to 10, characterised in that in each case the device (15) for applying liquid synthetic resin in the form of layers lies downstream of an associated device (10) for feeding fibrous carrier material web(s) (1) and serves to apply the liquid synthetic resin layer to or on the fibrous carrier material web(s) (1), that a device (17) for applying a pressure which acts for a short time to the carrier material web(s) (1') is provided in which web or webs the synthetic resin layer has already penetrated at least for the most part, that a heating device (16) is provided which precedes the device for applying the pressure in the direction of production and serves for heating the synthetic resin layers which have not yet penetrated into the carrier material web(s), that if necessary a cooling station (24) for the impregnated carrier material webs (1'') is provided, and that one or more take-up devices or a cutting device with a stacking device (19) for the impregnated and possibly cooled carrier material (1'') are provided.

12. Device according to Claim 11, characterised in that the device (17) for applying pressure consists of one or more sequentially arranged, possibly heated pair(s) of pressure rollers (9, 23).

13. Device for the simultaneous impregnation of two continuous carrier material webs according to Claim 11 or 12, characterised in that the device for applying a liquid synthetic resin layer has a pair of calibrating rollers and a jet (33), the pouring opening of which extends between the calibrating rollers (38), to introduce the liquid synthetic resin layer between the two carrier material webs (46, 47).

Fig. 1

Fig. 2

EP 0 185 742 B1

Fig. 3

EP 0 185 742 B1